# EUROPEAN PATENT APPLICATION

(11) **EP 4 756 606 A1**
(43) Date of publication of application: **10.06.2026**
(21) Application number: 24219840.6
(22) Date of filing: 13.12.2024
(51) Int. Cl.: G06F 8/34, G06F 8/38

(54) **METHOD FOR ESTABLISHING GRAPHICAL INTERFACE, DEVELOPMENT APPARATUS AND DEVELOPMENT SYSTEM**

(30) Priority: 03.12.2024 TW 113146682
(71) Applicant: Tatung University, Taipei 104 (TW)
(72) Inventor: CHENG, Fu-Chiung, 106016 Taipei City (TW); WANG, Dai-Xin, 103022 Taipei City (TW); LIU, Wei-Cheng, 231006 New Taipei City (TW)
(74) Representative: Ter Meer Steinmeister & Partner

(57) **Abstract**

A method for establishing a graphical interface, a development system (100), and a development apparatus (100A) are provided. The development apparatus (100A) is connected to a cloud server (100B) to use a development interface (130) providing an editing area (310) and a preview area (320) for: importing a spreadsheet file (410) including a plurality of paginations (411 to 416), and generating a plurality of response variables based on the paginations (411 to 416); binding at least one response variable to one or a plurality in a plurality of user interface elements; displaying a variable name of a dragged response variable in the editing area (310), and displaying a variable content (620) of the dragged response variable in the preview area (320) in response to one of the response variables being dragged to the editing area (310); generating a view program code corresponding to a graphical interface based on a current editing result in the editing area (310) in response to a saving function of the development interface (130) being enabled.

## Description

### BACKGROUND OF THE INVENTION

### Field of the Invention

The invention relates to the construction of a graphical interface, and in particular, to a method for establishing a graphical interface, a development system, and a development apparatus.

### Description of Related Art

With the increasing demand for modern application development, a developer is required to have program logic and interface design capabilities in the development of traditional applications (apps) and web pages. The developer needs to have knowledge of a plurality of languages and frameworks and needs to continually learn new techniques, with a steep learning curve for non-technical personnel or small teams. That is, the developer usually needs to use different programming languages and development tools for different operating systems (Android, iOS) or web browsers. An Android developer uses Java or Kotlin, an iOS developer uses Swift or Objective-C, and web development requires techniques such as HTML, CSS, JavaScript.

Since different platforms need to be developed separately, the processing of program logic and user interface design needs to be adjusted according to the differences in the platforms, making development, testing, debugging, and maintenance processes more cumbersome and time-consuming. In addition, developing an app or a web page of a plurality of platforms at the same time requires a team of developers having expertise in different platforms, thus increasing human resource costs. In addition, cross-platform testing and version control also require professional tools and additional investment of time and money. As application functions are increased and techniques are updated, maintaining a plurality of versions of code is more and more complex and inconvenient, especially when the technical stacks of different platforms are inconsistent and require re-downloading and installation when versions are updated. Different applications need to be installed according to the development and execution environment. In particular, iOS is restricted to be only developed in an Apple-related system.

Accordingly, the development of traditional apps and web pages has the following shortcomings: high technical threshold, long development cycle, high labor costs, high maintenance and update costs and long time, and the need for an installation environment.

Moreover, although low-code techniques reduce a portion of the programming coding, low-code techniques still rely on the client for compilation and development, and client-side logic is usually limited to established processes and command sets, thus making it difficult to meet complex application requirements and requires some background knowledge of programming to use. For example, Mendix is one of the representative low-code development tools on the market. The object thereof is to simplify the development process via a graphical interface and reduce the need for programming code. Mendix allows a user to use drag-and-drop functionality and a flowchart to build logic and an interface of an app, thus shortening the development cycle.

However, although Mendix simplifies the development process, the built-in building block process and command sets thereof are relatively fixed. When application logic is complex, the developer is often unable to implement customized logic, thus limiting the flexibility and the scalability of the app, resulting in insufficient flexibility. Since Mendix itself is a closed low-code platform, development and deployment of the user are both dependent on the environment of Mendix. As a result, the user may be locked into the ecosystem thereof, and the risk of long-term technical dependence (dependence on the Mendix platform) is increased. When the user needs to expand to larger or complex application scenarios, the graphical logic design of low-code tools often may not meet specific needs. In turn, more traditional code development needs to be involved to supplement the functions, thus making expansion difficult, which is contrary to the original intention of "code-free" or "low code". The Mendix development tools need to be downloaded and installed to develop. When the version is updated, the Mendix development tools need to be downloaded and installed again (a specific installation environment is needed).

### SUMMARY OF THE INVENTION

The invention provides a method for establishing a graphical interface, a development system, and a development apparatus providing a code-free development environment without issue of compilation errors, that may focus on creative design, and improve the work efficiency of designers.

A method for establishing a graphical interface, using a processor to perform following steps, including: connecting to a cloud server to use a development interface provided by the cloud server, wherein the development interface provides an editing area and a preview area; importing a spreadsheet file including a plurality of paginations via the development interface, and generating a plurality of response variables based on the paginations; binding at least one of the response variables to one or a plurality in a plurality of user interface elements via the development interface; displaying a variable name of a dragged response variable in the editing area, and displaying a variable content of the dragged response variable in the preview area in response to one of the response variables being dragged to the editing area; and generating a view program code based on a current editing result in the editing area in response to a save function of the development interface being enabled, wherein the view program code corresponds to a graphical interface.

A development system of a graphical interface of the invention includes: a cloud server providing a development interface, wherein the development interface provides an editing area and a preview area; and a development apparatus including a processor and a communication connector connected to the cloud server via the communication connector, wherein the processor is configured to execute the method for establishing the graphical interface.

A development apparatus of a graphical interface of the invention includes: a communication connector for connecting to a cloud server; and a processor coupled to the communication connector. The processor is configured to execute the method for establishing the graphical interface.

Based on the above, in the invention, a graphical interface and program logic are generated using a code-free technique, development of the interface is completed in a drag-and-drop manner, and a plurality of platforms are simultaneously developed using a single program code technique, thereby improving the efficiency of updates and maintenance. The invention adopts a code-free technique, has no issue of compilation errors, may focus on creative design, and improves the work efficiency of the designer.

### BRIEF DESCRIPTION OF THE DRAWINGS

FIG. 1 is a block diagram of a development system of a graphical interface according to an embodiment of the invention.
FIG. 2 is a flowchart of a method for establishing a graphical interface according to an embodiment of the invention.
FIG. 3 is a schematic diagram of a development interface according to an embodiment of the invention.
FIG. 4A and FIG. 4B are schematic diagrams of a spreadsheet file according to an embodiment of the invention.
FIG. 5A and FIG. 5B are schematic diagrams of the operation of binding response variables to UI elements according to an embodiment of the invention.
FIG. 6 is a schematic diagram of the operation of a variable element according to an embodiment of the invention.
FIG. 7 is a schematic diagram of the operation of a UI element according to an embodiment of the invention.
FIG. 8 is a schematic diagram of an editing window of a response variable according to an embodiment of the invention.
FIG. 9A and FIG. 9B are schematic diagrams of newly added customized elements according to an embodiment of the invention.
FIG. 10 is a schematic diagram of function settings according to an embodiment of the invention.
FIG. 11 is a schematic diagram of a logical building block corresponding to photography according to an embodiment of the invention.
FIG. 12A to FIG. 12C are schematic diagrams of backend development according to an embodiment of the invention.

### DESCRIPTION OF THE EMBODIMENTS

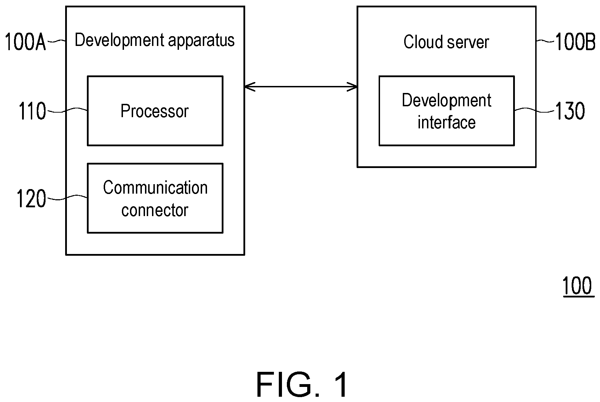

FIG. 1 is a block diagram of a development system of a graphical interface according to an embodiment of the invention. Referring to FIG. 1, a development system 100 includes a development apparatus 100A and a cloud server 100B. The development apparatus 100A may be any electronic apparatus having a computing function and a networking function. For example, the development apparatus 100A is a smartphone, a tablet computer, a notebook computer, a desktop computer, etc. The cloud server 100B is an electronic apparatus having powerful computing power and/or a large amount of storage space.

The development apparatus 100A at least includes a processor 110 and a communication connector 120. The processor 110 is coupled to the communication connector 120. The processor 110 may be implemented by adopting a central processing unit (CPU), a physical processing unit (PPU), a programmable microprocessor, an embedded control chip, a digital signal processor (DSP), an application-specific integrated circuit (ASIC), or other similar apparatuses.

The communication connector 120 may be a chip or a circuit adopting local area network (LAN) technique, wireless LAN (WLAN) technique, or mobile communication technique. The local network is Ethernet, for example. The wireless local area network is Wi-Fi, for example. The mobile communication technique is, for example, Global System for Mobile Communications (GSM), third-generation mobile communication technique (Third-Generation, 3G), fourth-generation mobile communication technique (Fourth-Generation, 4G), fifth-generation mobile communication technique (Fifth-Generation, 5G), etc.

The cloud server 100B also includes at least a processor and a communication connector. The configurations of the processor and the communication connector are the same as the processor 110 and the communication connector 120 respectively. In addition, the cloud server 100B provides a development interface 130. In an embodiment, the user may use the browser of the development apparatus 100A to connect to the development interface 130 of the cloud server 100B to directly develop (establish) a graphical interface in the browser.

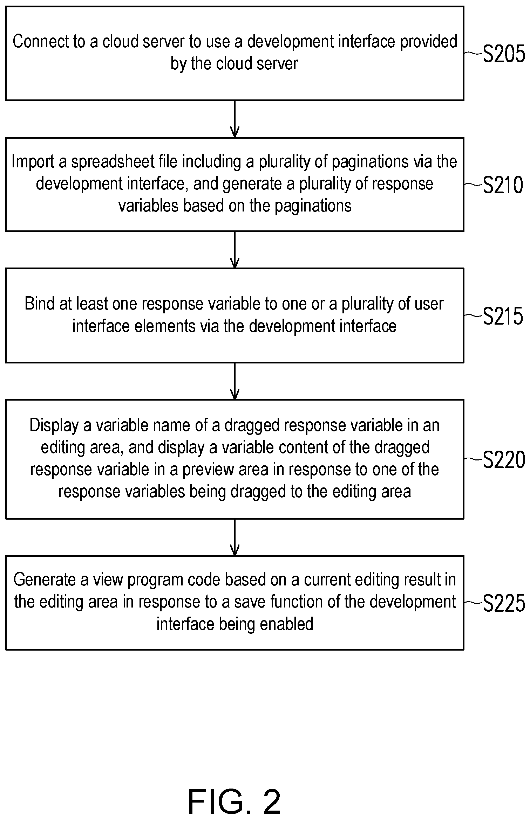

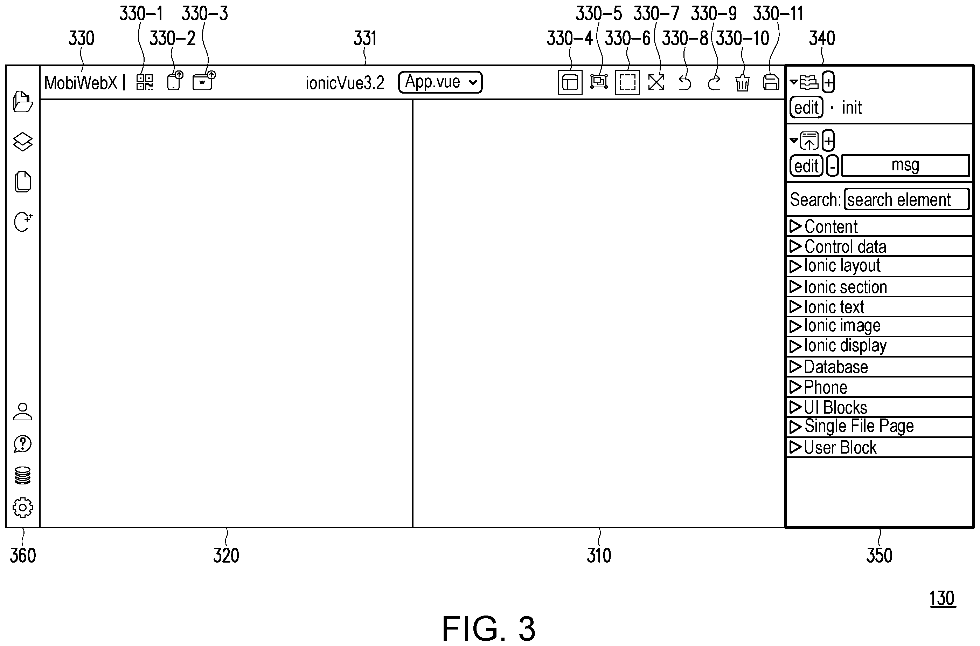

FIG. 2 is a flowchart of a method for establishing a graphical interface according to an embodiment of the invention. Referring to FIG. 2, in step S205, the processor 110 is connected to the cloud server 100B to use the development interface 130 provided by the cloud server 100B. For example, FIG. 3 is a schematic diagram of a development interface according to an embodiment of the invention. Referring to FIG. 3, the development interface 130 provides an editing area 310 and a preview area 320.

In an embodiment, when the user uses the browser of the development apparatus 100A to connect to the development interface 130, the user needs to enter a set of account number and password to log in to use the development interface 130. In addition, third-party accounts and passwords such as social networking sites (such as Facebook, LINE, X, etc.) may also be used to log in.

In addition, the development interface 130 further provides a toolbar 330, a variable menu 340, an element menu 350, and a tool menu 360. In an embodiment, a project name 331 is displayed in the toolbar 330, and a plurality of functions 330-1 to 330-11 are provided. The function 330-1 is used to generate a code (such as Quick Response Code (QR code)) for scanning by an electronic apparatus (such as an electronic apparatus having a camera and a networking function such as a smartphone or a tablet). Then, the view program code generated by the development interface 130 is executed in the electronic apparatus. The function 330-2 is used to provide mobile phone simulation, and a preview window may pop up to show how the view program code generated by the development interface 130 runs on the mobile phone. The function 330-3 is used to provide web page simulation, and a preview window may pop up to show how the view program code generated by the development interface 130 runs on the web page.

In addition, the function 330-4 is used to display the page of the current editing area 310. The function 330-5 is used to switch between the editing area 310 and the preview area 320. The function 330-6 is used to determine the outer frame of the element displayed at the editing area 310. The function 330-7 is used to determine whether to display the editing area 310 in full screen. The function 330-8 is used to return to the previous step. The function 330-9 is used to advance to the next step when returning to the previous step. The function 330-10 is used to clear the entire page of the content of the editing area 310. The function 330-11 is used to save the current content of the editing area 310.

The variable menu 340 provides a plurality of options, that is, a plurality of designed response variables for the user to select. The element menu 350 provides a plurality of options, namely designed elements and/or basic elements, for the user to select. The options in the variable menu 340 correspond directly to the variable element, and the variable element represents one response variable or function. Each option in the element menu 350 corresponds to one user interface (UI) element, and the UI element may be pre-bound to one or a plurality of response variables, or the user may subsequently set the response variables to be bound by the UI element via the editing area 310. The tool menu 360 provides a function of layer editing, an editing function of attribute and style, etc.

Moreover, the development interface 130 may further save the UI element bound to the response variables to the cloud server 100B as a customized element, and import the customized element into the element menu 350 of the development interface 130.

Returning to FIG. 2, in step S210, a spreadsheet file including a plurality of paginations is imported via the development interface 130, and a plurality of response variables are generated based on the paginations. Here, the spreadsheet file is, for example, an Excel file. For example, data may be established in the spreadsheet in advance, and the spreadsheet file may be imported into the development interface 130. The development interface 130 builds the corresponding data table and response variables according to the pagination names of the paginations.

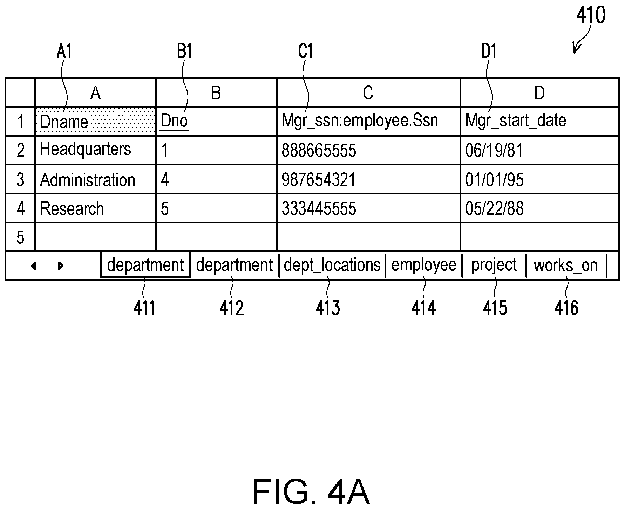

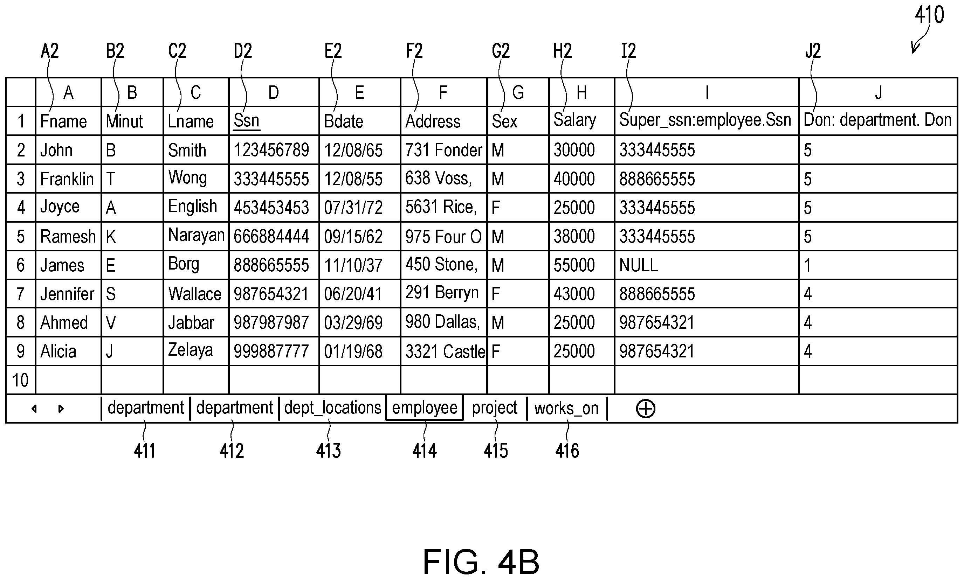

FIG. 4A and FIG. 4B are schematic diagrams of a spreadsheet file according to an embodiment of the invention. In the present embodiment, a spreadsheet file 410 includes six paginations 411 to 416. FIG. 4A shows the content corresponding to the pagination 411, and FIG. 4B shows the content corresponding to the pagination 414.

After the spreadsheet file 410 is imported into the development interface 130, the development interface 130 generates 6 response variables "department", "dependent", "dept_locations", "employee", "project", "works_on", and corresponding 6 data tables based on the 6 paginations 411 to 416. Moreover, the data table name corresponding to each data table is set based on the pagination name, such as "department", "dependent", "dept_locations", "employee", "project", and "works _on".

Each of the paginations 411 to 416 in the spreadsheet file 410 includes a plurality of fields, and each field has a field description. In a case in which the field description is not in the specified format, the field description is treated as the field name. When a field name has an underline, the corresponding field thereof is considered the primary key. When the primary key is composed of one or a plurality of fields, each field belonging to the same main item needs to be underlined.

A field having a background color is considered a secondary key. When a secondary key is composed of one or a plurality of fields, each field belonging to the same secondary key needs to be set to the same background color. Different secondary keys adopt different background colors.

In a case in which the field description conforms to the specified format, the field for which the field description conforms to the specified format is considered a foreign key. For example, the specified format is " f field name}: {data table name}, {field name of data table}". That is, when the format of the field name matches the specified format, whether there is an existing data table and a corresponding field name thereof is identified. A foreign key is established when the above exist.

Taking the pagination 411 (the corresponding data table name thereof is "department") as an example, there are four fields A1 to D1. The field description of the field A1 is "Dname", serving as the field name of the field A1. The field description of the field B1 is "Dno", serving as the field name of the field B1. The field description of the field C1 is "Mgr_ssn:employee.Ssn", conforming to the specified format, and "Mgr_ssn" represents the field name of the field C1. The field description of the field D1 is "Mgr_start_date", used as the field name of the field D1.

In the pagination 411, the field name "Dno" of the field B1 has an underline, so the field B1 is set as the primary key. The field A1 (i.e., "Dname") has a background color (here represented by dots), so the field A1 is set as a secondary key. The format of the field description of the field C1 conforms to the specified format (for example, " f field name}:{ data table name}. { data table field name}"), set as a foreign key. Regarding the field description "Mgr ssn:employee.Ssn" of the field C1, wherein "Mgr_ssn" represents the field name corresponding to the field C1, and "employee" represents one data table name, and "Ssn" represents one field name in the data table name "employee".

Taking the pagination 414 (the corresponding data table name thereof is "employee") as an example, there are 10 fields A2 to J2. The field name "Ssn" of the field D2 has a bottom line, so the field D2 is set is the primary key. Moreover, the field descriptions "Super_ss:employee.Ssn" and "Dno:department.Dno" of both the field I2 and the field J2 match the specified format and are set as foreign keys.

After it is determined that the field description "Mgr_ssn:employee. Ssn" corresponding to the field C1 of the data table "department" meets the specified format, a plurality of data tables established are found according to "employee" (for example, 6 data tables corresponding to 6 paginations 411 to 416). Next, after the corresponding data table "employee" is found, and the field D2 having the field name "Ssn" is found in the data table "employee" (as shown in FIG. 4B), the field C1 of the data table "department" is set as a foreign key. Accordingly, when the field C1 of the data table "department" is related to the primary key of the data table "employee", the foreign key may be set by setting the field description in the specified format f field name}:{data table name}. {data table field name}.

Moreover, in the data table "employee", "Super ssn:employee.Ssn" and "Dno:department.Dno" establish foreign keys according to the data table "employee" and the data table "department" respectively.

Returning to FIG. 2, in step S215, at least one response variable is bound to one or a plurality of user interface (UI) elements via the development interface 130. That is, the user may use the browser of the development apparatus 100A to connect to the development interface 130 of the cloud server 100B, and bind the established response variables to the UI elements via the development interface 130, so that the development interface 130 may generate corresponding data via the content of the response variables. For example, the UI interface may be bound to the response variables using the command "v-bind", the command "v-for", and the command "v-html".

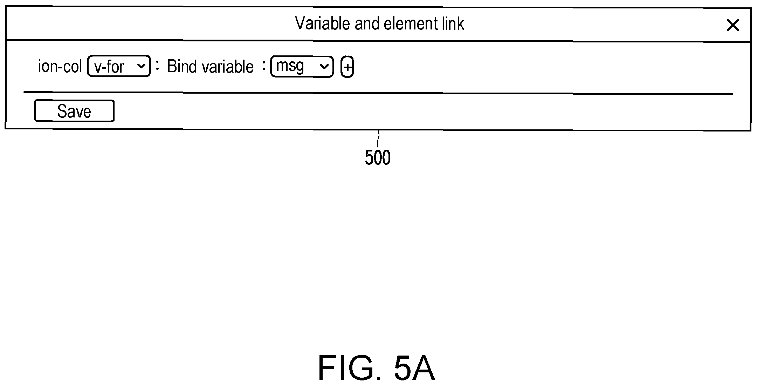

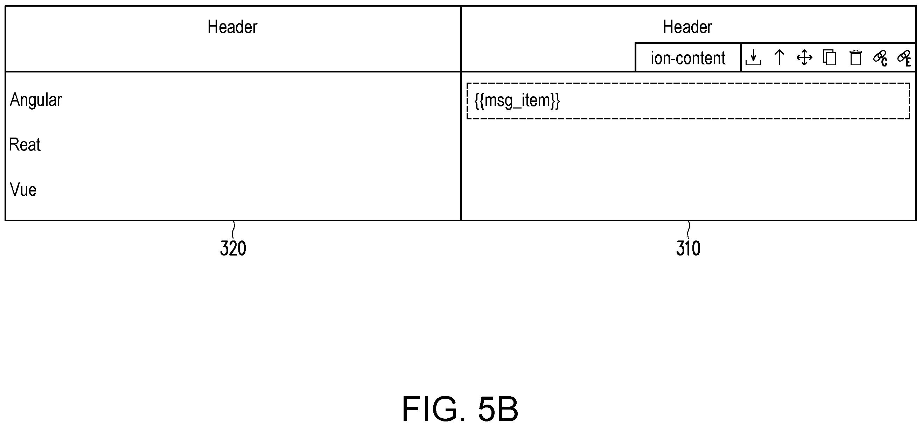

FIG. 5A and FIG. 5B are schematic diagrams of the operation of binding response variables to UI elements according to an embodiment of the invention. FIG. 5A shows a binding editing window 500. In the binding editing window 500, the UI element is bound to the response variable "msg" using the command "v-for". In an embodiment, the variable content of the response variable "msg" is set to ["Angular", "React", "Vue"]. After binding, when the response variable "msg" is dragged to the editing area 310, the content shown in FIG. 5B is sequentially displayed in the preview area 320 at the same time. In addition, the UI elements may also be bound to pictures using the command "v-for", and a plurality of pieces of data may also be displayed at one time.

In step S220, in response to one of the response variables being dragged to the editing area 310, the variable name of the dragged response variable is displayed in the editing area 310, and the variable content of the dragged response variable is displayed in the preview area 320.

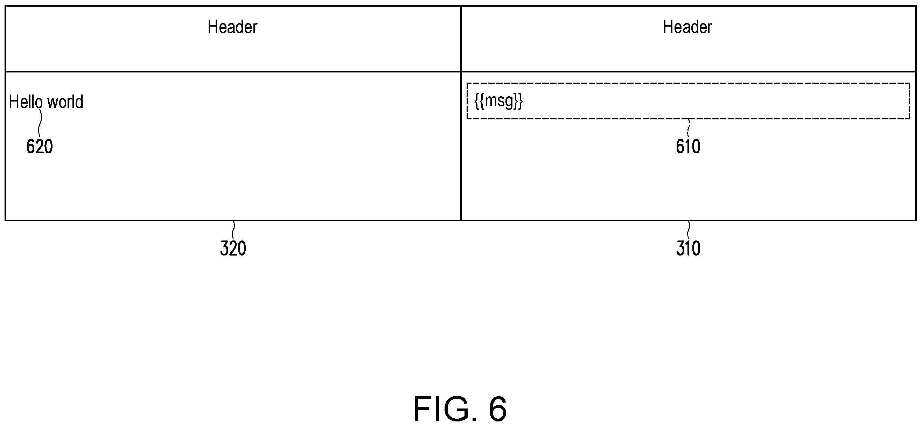

FIG. 6 is a schematic diagram of the operation of a variable element according to an embodiment of the invention. Referring to FIG. 6, in the present embodiment, the content displayed in the editing area 310 and the preview area 320 is illustrated when the response variable in the variable menu 340 (shown in FIG. 3) is dragged to the editing area 310. Assuming that the response variable "msg" in the variable menu 340 is dragged to the editing area 310, a variable element 610 is displayed in the editing area 310, and the variable name "{{msg}}" is displayed. At the same time, a variable content 620 of the response variable "msg" is displayed in the preview area 320, for example, "Hello world".

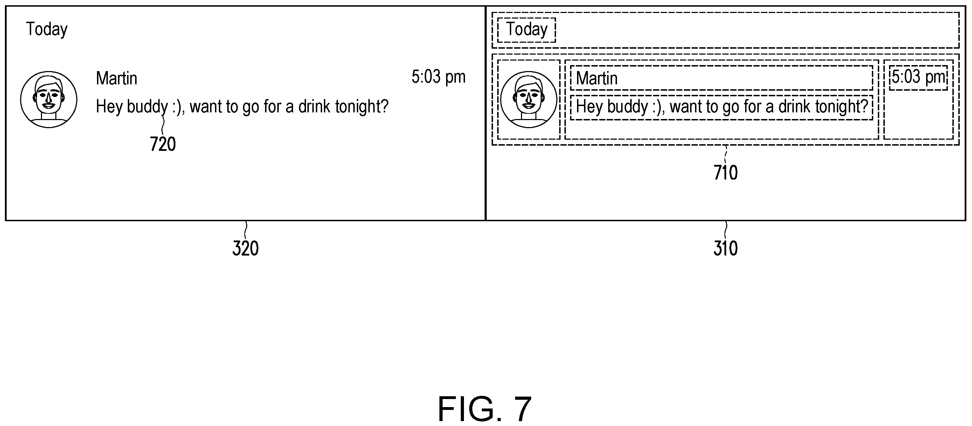

FIG. 7 is a schematic diagram of the operation of a UI element according to an embodiment of the invention. Referring to FIG. 7, in the present embodiment, the content displayed in the editing area 310 and the preview area 320 is illustrated when the UI element in the element menu 350 (shown in FIG. 3) is dragged to the editing area 310. In FIG. 7, the editing area 310 displays a UI element 710, and the preview area 320 displays a visual content 720 corresponding to the UI element 710.

Moreover, assuming that the UI element 710 is bound to a response variable, when the UI element 710 is dragged to the editing area 310, the UI element 710 in the editing area 310 displays the variable name of the response variable, and at the same time, the preview area 320 displays the variable content of the response variable bound to the UI element.

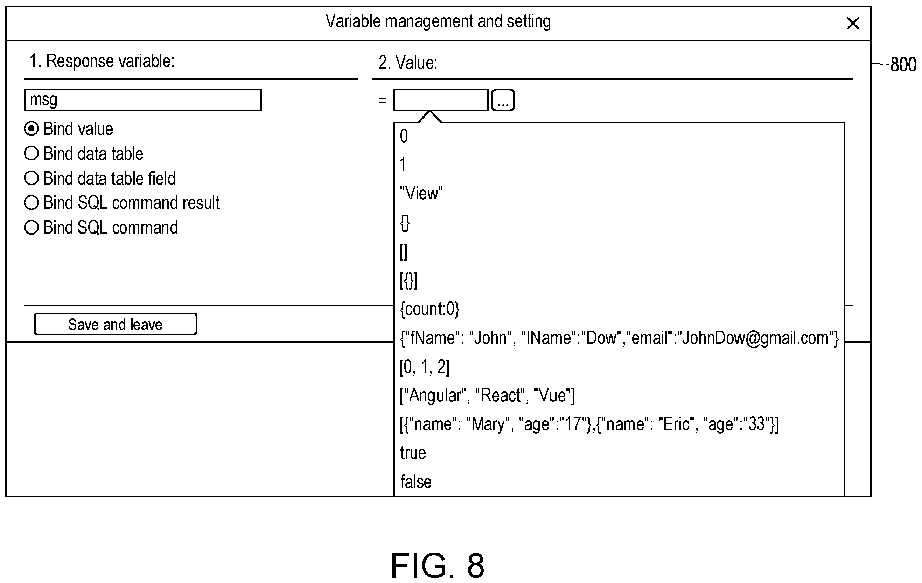

In an embodiment, the development interface 130 provides an editing function. When the display editing function is enabled, an editing window is displayed to edit the response variables displayed in the editing area 310. FIG. 8 is a schematic diagram of an editing window of a response variable according to an embodiment of the invention. As shown in FIG. 8, the content of the response variable "msg" may be adjusted in an editing window 800. For example, the corresponding value thereof may be set to be a number, a string, an object, an array, a bound database, or a database command, etc.

After the editing is completed, the edited UI elements may also be saved to the cloud server 100B as customized elements. In addition, the development interface 130 may also import one or a plurality of customized elements from the cloud server 100B at any time and add the customized elements to the element menu 350 of the development interface 130. Or, a new UI element is established directly in the editing area 310, and after completion, the new UI element is uploaded to the cloud server 100B, and then imported into the development interface 130 to appear in the element menu 350.

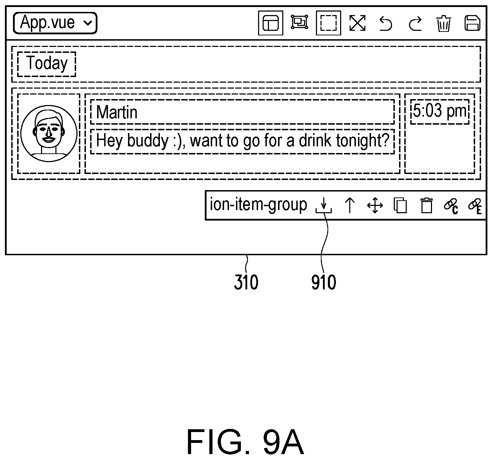

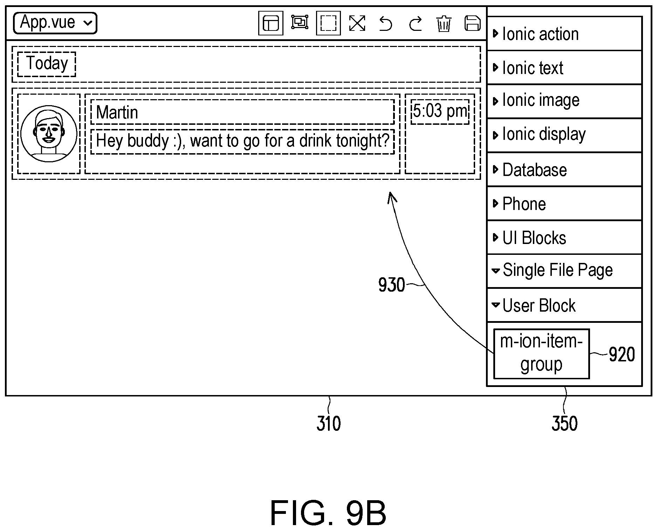

FIG. 9A and FIG. 9B are schematic diagrams of newly added customized elements according to an embodiment of the invention. Referring to FIG. 9A, after the user establishes a new UI element (or re-edits an existing UI element) via the editing area 310, a function button 910 may be pressed to import the new UI element or the re-edited UI element into the element menu 350 in the development interface 130 to become a new option 920. Accordingly, the option 920 in the element menu 350 may be directly dragged (as shown by a drag track 930) to the editing area 310 for use.

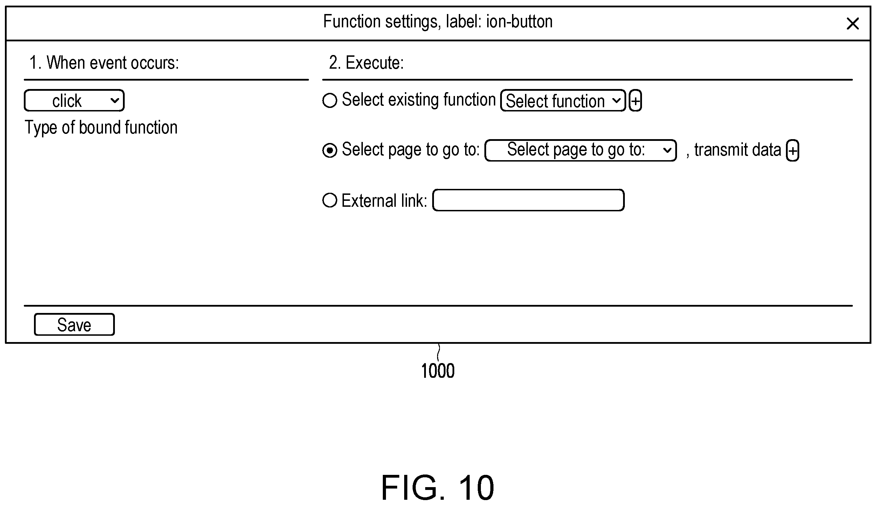

FIG. 10 is a schematic diagram of function settings according to an embodiment of the invention. Referring to FIG. 10, the development interface 130 further provides a function setting window 1000. Via the function setting window 1000, settings may be made for simple behaviors, such as page changes, external links, and direct changes to response variables. In the present embodiment, the action "click" of pressing the button is set as the page change behavior of "select the page to go to", and the page is selected in the menu.

When a more complex function is to be used, a visual program building block development platform may be called to establish a logical building block. Specifically, in response to the remote editing function of the development interface 130 being enabled, the visual program building block development platform is connected via the development interface 130, a logical building block of a custom UI element is established and a program code snippet corresponding to the logical building block is generated using the visual program building block development platform; and the program code snippet is transmitted to the development interface 130 via the visual program building block development platform to display the custom UI element in the element menu 350 of the development interface 130. The visual program building block development platform may edit a more complex program using a simple building block.

The visual programming building block development platform is, for example, the Snap! tool (see https://iot.ttu.edu.tw/Snap9uPythonPicoW/SnapPlus.html). However, this is only an example and is not limited thereto. When the Snap! tool is opened via the development interface 130, important information such as response variables, tokens, and databases are passed to the Snap! tool for use by the user when developing a custom UI element. Each program building block provided by the Snap! tool has a corresponding preset program code snippet. The user may create a complex program by simply combining the desired building blocks according to logic. The program building blocks provided by the Snap! tool have various preset APIs (application programming interface) that may be used. For example, the API of a mobile phone function, the API of the tool set "VueUse", the API of the database, and the API related to network. The Snap! tool may implement a variety of application tools, such as Snap!IoT, Snap!AI, Snap!PHP, etc.

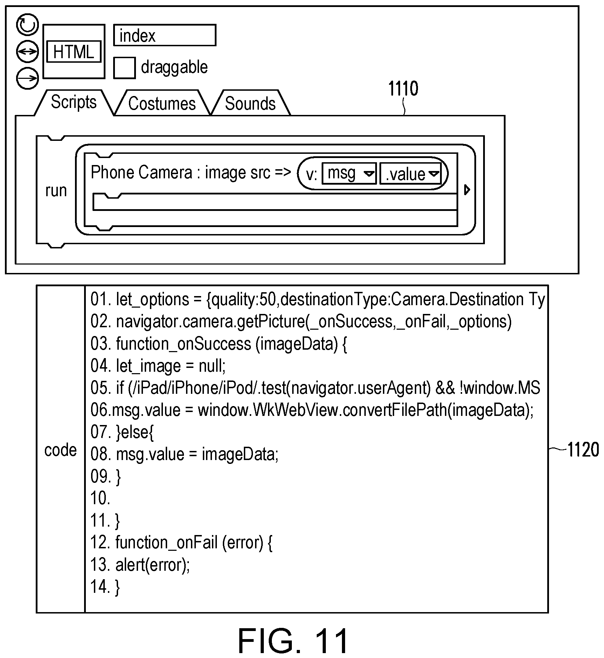

FIG. 11 is a schematic diagram of a logical building block corresponding to photography according to an embodiment of the invention. Please refer to FIG. 11. A logical building block 1110 corresponding to taking a photo has a corresponding program code snippet 1120, setting the result of taking a photo ("imageData") to the value of the response variable ("msg.value").

After the custom UI element is created at the visual program building block development platform and the save function is executed, the visual program building block development platform returns the program code snippet converted by the custom UI element to the development interface 130 to save the program code snippet in the corresponding area in the view program code via the development interface 130. For example, for the VUE framework, the converted program code snippet is recorded in <script setup>.

For an architecture executing simulation on a file (view program code) generated by the development interface 130, the development apparatus 100A saves the view program code to the URL directory of the cloud server 100B via the development interface 130, so that the cloud server 100B shares a download URL corresponding to the view program code. In an embodiment, the format of the download URL is a Uniform Resource Locator (URL). The development interface 130 uploads the file (view program code) to the cloud server 100B via the message queuing telemetry transport (MQTT) protocol. After the file is saved to the corresponding URL directory, the URL is further shared with the user.

In an embodiment, the user may view the simulation execution effect of the current editing result at any time during the editing process. For example, in the case of mobile phone simulation architecture, the view program code of the current editing result may be sent to the download URL provided by the cloud server 100B via the development interface 130, and a code may be generated based on the download URL. The code is, for example, a QR code. After the QR code is generated, the QR code is displayed in the display of the development apparatus 100A, and a user may use a smartphone to scan the QR code, so as to download the view program code from the download URL to the smartphone, and execute the simulation in the smartphone.

The mobile phone simulation architecture downloads the view program code into the smart phone, and in another embodiment, the developer may also directly perform mobile phone simulation via the development interface 130 without performing a package and shelf action to see how the view program code runs in the mobile phone.

In addition, the cloud server 100B may be made to package the view program code for different operating system platforms (such as Android and/or iOS) via a command, and return the packaged file to the development interface 130.

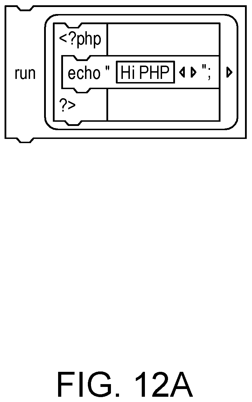

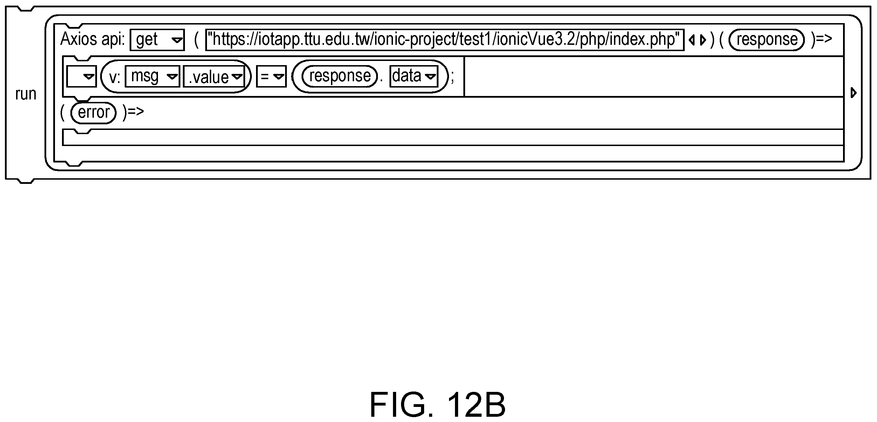

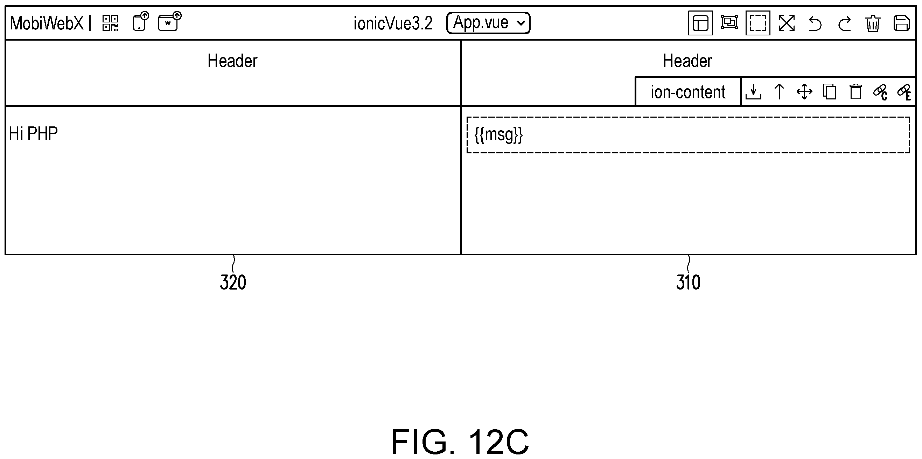

The development of both apps and web pages is frontend, and a development function of PHP background is provided to improve security via the execution of background PHP. FIG. 12A to FIG. 12C are schematic diagrams of backend development according to an embodiment of the invention. In the present embodiment, the development of the PHP backend may also involve the use of a visual program building block development platform (such as the Snap! IoT tool) to combine logical building blocks to create the backend, as shown in FIG. 12A. The completed PHP content is uploaded to the cloud server 100B, and the corresponding URL is provided to the development interface 130. At this time, the frontend may obtain the content returned by PHP via the Axios API, and the result may be saved directly in the response variable, as shown in FIG. 12B. During actual simulation, the background PHP content may be obtained via the Axios API for direct use or display, as shown in FIG. 12C.

Based on the above, in the invention, by integrating the development interface, simple data binding functions (such as using spreadsheet files for data management), and the logical processing mechanism of the visual program building block development platform, the developer may quickly build a cross-platform application on one unified platform. Taking the VUE framework as an example, in the disclosure, the graphical interface and the program logic are separated. The developer may not only design the interface intuitively (for example, using drag-and-drop to create a view of the VUE framework), but also define application logic via a visual building block, thus significantly improving the flexibility and the efficiency of application development.

The disclosure provides one code-free development environment, allowing a user without a program development background to readily design an app and develop logic, breaking the professional technical barriers of traditional program development and lowering the technical threshold. In addition, there is no need for an installation environment, and an existing browser (such as Chrome, Edge, Safari, etc.) may be used to connect to the development interface of the cloud server for development. The disclosure combines a visual UI design tool and logical processing mechanisms based on the Snap! IoT tool. The user may design an app interface via a simple drag-and-drop operation and define app logic via a building block program, thus significantly shortening app development time and improving development efficiency. The disclosure supports cross-platform development, and the developer may design and deploy the app in one unified environment, avoiding technical incompatibility issues between different platforms in the traditional development tool. The disclosure provides flexible data binding and logical processing, that is, via integration with a data binding tool (such as a spreadsheet such as Excel), a dynamic data processing function is realized, and the developer is allowed to define customized logic and processes to enhance the flexibility and the scalability of the app. Since there is no need to write complex codes, maintenance and updates of the app are simpler and more intuitive, and instant app upgrade may be achieved via cloud deployment, simplifying the maintenance and update process. The disclosure may be deployed with one click. There is no need to install a system environment. The view program code generated by cloud packaging may be executed with one click via the development interface.

## Claims

1. A method for establishing a graphical interface, using a processor (110) to perform following steps, comprising:
connecting to a cloud server (100B) to use a development interface (130) provided by the cloud server (100B), wherein the development interface (130) provides an editing area (310) and a preview area (320);
importing a spreadsheet file (410) comprising a plurality of paginations (411 to 416) via the development interface (130), and generating a plurality of response variables based on the paginations (411 to 416);
binding at least one of the response variables to one or a plurality in a plurality of user interface elements via the development interface (130);
displaying a variable name of a dragged response variable in the editing area (310), and displaying a variable content (620) of the dragged response variable in the preview area (320) in response to one of the response variables being dragged to the editing area (310); and
generating a view program code based on a current editing result in the editing area (310) in response to a save function of the development interface (130) being enabled, wherein the view program code corresponds to a graphical interface.

2. The method for establishing the graphical interface of claim 1, wherein when the variable name of the dragged response variable is displayed in the editing area (310), further comprising using the processor (110) to perform a following step:
displaying an editing window (500, 800) to edit the variable content (620) of the dragged response variable in response to an editing function of the development interface (130) being enabled.

3. The method for establishing the graphical interface of claim 1, wherein the development interface (130) further comprises providing a variable menu (340) and an element menu (350), the variable menu (340) is used to provide the response variables, and the element menu (350) is used to provide the user interface elements,
wherein after the at least one of the response variable is bound to the one or the plurality in the user interface elements via the development interface (130), further comprising using the processor (110) to perform a following step:
displaying a dragged user interface element in the editing area (310), and at a same time, displaying the variable content (620) of the at least one of the response variables bound to one of the user interface elements in the preview area (320) in response to the one of the user interface elements bound to the at least one of the response variables being dragged to the editing area (310).

4. The method for establishing the graphical interface of claim 1, wherein after the at least one of the response variables is bound to the one or the plurality in the user interface elements via the development interface (130), further comprising using the processor (110) to perform a following step:
saving one of the user interface elements bound to the at least one of the response variables in the cloud server (100B) as a customized element.

5. The method for establishing the graphical interface of claim 1, further comprising using the processor (110) to perform a following step:
importing one or a plurality of customized elements from the cloud server (100B) and adding the customized elements to an element menu (350) of the development interface (130).

6. The method for establishing the graphical interface of claim 1, further comprising using the processor (110) to perform following steps:
connecting to a visual program building block development platform in response to a remote editing function of the development interface (130) being enabled;
establishing a logical building block (1110) of a custom user interface element, and generating a program code snippet (1120) corresponding to the logical building block (1110) using the visual program building block development platform; and
transmitting the program code snippet (1120) from the visual program building block development platform to the development interface (130) to display the custom user interface element in an element menu (350) of the development interface (130).

7. The method for establishing the graphical interface of claim 1, wherein the step of generating the response variables based on the paginations (411 to 416) comprises:
generating each of the response variables and a corresponding data table based on a pagination name of each of the paginations (411 to 416),
wherein each of the paginations (411 to 416) in the spreadsheet file (410) comprises a plurality of fields (A1 to D1, A2 to J2), and each of the fields (A1 to D1, A2 to J2) has a field name,
in a case in which the field name has an underline, one of the corresponding fields (A1 to D 1, A2 to J2) is considered a primary key,
in a case in which the field name has a background color, one of the corresponding fields (A1 to D1, A2 to J2) is considered a secondary key,
one of the fields (A1 to D1, A2 to J2) for which a field description conforms to a specified format is considered a foreign key.

8. The method for establishing the graphical interface of claim 1, further comprising using the processor (110) to perform following steps:
transmitting the view program code to a download URL provided by the cloud server (100B), and generating a code based on the download URL via the development interface (130);
displaying the code in a display, allowing an electronic apparatus to scan the code displayed in the display, so that the electronic apparatus runs the view program code.

9. The method for establishing the graphical interface of claim 1, further comprising using the processor (110) to perform a following step:
saving the view program code in a URL directory of the cloud server (100B) via the development interface (130), so that the cloud server (100B) shares a download URL corresponding to the view program code.

10. A development system (100) of a graphical interface, comprising:
a cloud server (100B) providing a development interface (130), wherein the development interface (130) provides an editing area (310) and a preview area (320); and
a development apparatus (100A) comprising a processor (110) and a communication connector (120) connected to the cloud server (100B) via the communication connector (120), wherein the processor (110) is configured to:
connect to the cloud server (100B) to use the development interface (130);
import a spreadsheet file (410) comprising a plurality of paginations (411 to 416) via the development interface (130), and generate a plurality of response variables based on the paginations (411 to 416);
bind at least one of the response variables to one or a plurality in a plurality of user interface elements via the development interface (130);
display a variable name of a dragged response variable in the editing area (310), and display a variable content (620) of the dragged response variable in the preview area (320) in response to one of the response variables being dragged to the editing area (310); and
generate a view program code based on a current editing result in the editing area (310) in response to a save function of the development interface (130) being enabled, wherein the view program code corresponds to a graphical interface.

11. A development apparatus (100A) of a graphical interface, comprising:
a communication connector (120) for connecting to a cloud server (100B); and
a processor (110) coupled to the communication connector (120), the processor (110) configured to:
connect to a cloud server (100B) to use a development interface (130) provided by the cloud server (100B), wherein the development interface (130) provides an editing area (310) and a preview area (320);
import a spreadsheet file (410) comprising a plurality of paginations (411 to 416) via the development interface (130), and generate a plurality of response variables based on the paginations (411 to 416);
bind at least one of the response variables to one or a plurality in a plurality of user interface elements via the development interface (130);
display a variable name of a dragged response variable in the editing area (310), and display a variable content (620) of the dragged response variable in the preview area (320) in response to one of the response variables being dragged to the editing area (310); and
generate a view program code based on a current editing result in the editing area (310) in response to a save function of the development interface (130) being enabled, wherein the view program code corresponds to a graphical interface.
